# EUROPEAN PATENT SPECIFICATION

(11) **EP 2 470 027 B1**
(45) Date of publication and mention of the grant of the patent: **17.04.2019**
(21) Application number: 10725693.5
(22) Date of filing: 17.06.2010
(51) Int. Cl.: A23C 1/04, A23C 1/16, A23C 9/12, A23C 9/154, A23C 21/02, A23C 9/16

(54) **LACTASE CONTAINING MILK POWDER**
LACTASEHALTIGES MILCHPULVER
POUDRE DE LAIT CONTENANT DE LA LACTASE

(30) Priority: 23.06.2009 EP 09163435
(43) Date of publication of application: 04.07.2012
(73) Proprietor: Nestec S.A., 1800 Vevey (CH)
(72) Inventor: BRAUN, Marcel, CH-3510 Konolfingen (CH); NIEDERREITER, Caroline, CH-1073 Savigny (CH)
(74) Representative: Cogniat, Eric Jean Marie
(86) International application number: PCT/EP2010/058511
(87) International publication number: WO 2010/149557

(56) References cited:
- EP-A- 0 458 358
- BURIN L ET AL: "Thermal resistance of beta -galactosidase in dehydrated dairy model systems as affected by physical and chemical changes." FOOD CHEMISTRY, vol. 76, no. 4, 2002, pages 423-430, XP002539394 DEP. DE IND., FAC. DE CIENCIAS EXACTAS Y NATURALES, BUENOS AIRES, ARGENTINA. TEL. +54-11-4794-3344. FAX +54-11-4576-3366. E-MAIL PILAR(A)DI.FCEN.UBA.AR
- PALUMBO M S ET AL: "Stability of beta-galactosidase from Aspergillus oryzae and Kluyveromyces lactis in dry milk powders" JOURNAL OF FOOD SCIENCE, vol. 60, no. 1, 1995, pages 117-119, XP002539395 ISSN: 0022-1147

## Description

### Field of the invention

The present invention relates to milk powder compositions comprising lactase and to processes for the manufacture of said milk powder compositions. The processes have been found to stabilise lactase in said milk powder compositions. It further relates to the use of said milk powder compositions in alleviating the symptoms of gastro-intestinal intolerance in mammals.

### Background of the invention

Milk-based formulas typically contain lactose which can lead to digestive problems for lactose intolerant persons. To overcome this problem, lactose is enzymatically hydrolysed by lactase.

There are three traditional ways in which lactose is hydrolysed in milk powders. In a first way, the milk powder is reconstituted with water and lactase is added at a defined time prior to consumption. This method requires manual dosing and handling of lactase and is therefore prone to dosing errors and handling problems and therefore not optimal for the consumer.

In a second process, lactose in milk is partially or completely hydrolysed by lactase treatment before drying the milk to produce a milk powder composition. In this process, lactose is hydrolysed to equal amounts of glucose and galactose. These monosaccharides however lead to strongly increased browning-reactions (e.g. Maillard reactions) upon storage at normal or elevated temperatures and consequently to browning of the compositions, flavour change and reduction in nutritional value. Therefore, the storage stability of these powders is seriously affected. The resulting powder also suffers from caking issues, taste deterioration due to Maillard reactions and browning.

A third process known to reduce these problems is the addition of active lactase to milk powder as a dry mix. However, there are problems of de-mixing by vibrations during manufacturing and storage, resulting in inhomogeneous distribution of lactase activity in milk powder and consequently variation in lactose hydrolysis efficiency upon reconstitution. Another problem of this process is the reduction of lactase activity during storage, especially at elevated temperatures. This is mentioned in the article by Burin et al. (2002), Food Chemistry 76:423-430 "Thermal resistance of beta-galactosidase in dehydrated dairy model systems as affected by physical and chemical changes". The article by Palumbo et al. (1995), Journal of Food Science 60(1):117-119 "Stability of Beta-Galactosidase from Aspergillus oryzae and Kluyveromyces lactis in Dry Milk Powders" compares the stability of the enzyme activity in various milk powders at different storage temperatures.

Depending on the type of lactase, further problems include inactivation of lactase in the strongly acidic environment of the stomach.

To solve the problem of loss of lactase activity in the stomach, US 5,902,617 describes a formula which contains an enzyme which is in a form stable to storage, typically by providing an enteric coating to said enzyme. The enzyme is then activated upon digestion.

WO00/13526 also describes a pet milk powder comprising milk powder and a lactase. The stability issue is however not mentioned.

Lactase enzymes used essentially for the purpose of hydrolysing lactose have been described in the prior art.

For example, WO02/081673 relates to a purified lactase solution which can be used in the production of pasteurised, lactose-reduced milk.

Lactases of different types and having different activity pH optima are described in US 6,562,339 and are suitable for addition to dairy products for lactose-intolerant individuals.

Lactase enzymes compositions with enhanced shelf-stability are described in EP 1 208 848. The compositions are said to contain less than 10 wt% of a reducing sugar.

US2001/0022986 is concerned with the provision of a sports drink which is based on a dairy permeate having a very low amount of milk protein and which may also be treated with a lactase enzyme to break down lactose and render it suitable for lactose-intolerant individuals.

A further problem which occurs in lactose-hydrolysed milk products is the generation of poor taste. A few publications have attempted to solve this problem.

For example, US 4,853,246 describes a reduced lactose milk product which has good tasting properties. The enhanced tasting properties are said to be due to a combination of added milk solids and lactase.

WO2007/060247 proposes to solve the problem of off-flavours in lactose-hydrolysed UHT milk by treating dairy products with a lactase having reduced amount of arylsulfatase.

Many of these applications are focused on the reduction of enzymatic side activities of the lactase preparation which can create off-tastes like bitterness due to e.g. proteolysis.

The off-flavours formed due to storage of lactose hydrolyzed milk powders at elevated temperatures has hitherto not been addressed. However it is very common, in tropical countries in particular, to have high storage temperatures during transportation and storage of milk powders. Although the storage times at high temperature exposure are relatively short, product browning and taste deviation are very significant.

There is therefore a need to address the drawbacks of current lactose-hydrolysed formulations and in particular the address the issue of stability to storage.

### Object of the invention

The object of the invention is therefore to provide milk powders comprising lactase which are storage stable.

### Summary of the invention

This object is solved by means of the independent claims. The dependent claims further develop the central idea of the invention.

A process for the manufacture of a milk powder composition comprising 5-70 % lactose and lactase comprising the steps of co-drying a lactase solution and a milk composition to form said milk powder composition also forms part of the invention, as in claim 1.

A milk powder obtainable by any of the processes of the invention is also described.

The invention also pertains to the use of a process according to any of claims 1 to 5 for stabilising lactase in a milk powder composition.

In a further aspect, a milk powder composition comprising lactose and lactase, wherein the lactase is physically associated with the milk powder particles obtainable by a process according to any of claims 1-5, for use in alleviating the symptoms of lactose intolerance in mammals, also forms part of the invention, as in claim 7.

### Brief description of the figures

Figure 1 shows the browning occurring upon storage for 1 week at 55°C, 2 weeks at 55°C, 1 week at 65°C and 2 weeks at 65°C for powders produced by processes of the invention (top row) compared to powders produced by dry mixing milk powder and lactase enzyme powder (bottom row).
Figure 2 compares the lactase storage stability in powders produced by processes of the invention (wet mix) compared to powders produced by dry mixing milk powder and lactase enzyme powder (dry mix) upon 2 weeks storage at 55°C and 1 week storage at 65°C.

### Detailed description

The invention relates to processes for the manufacture of a milk powder composition comprising 5-70% lactose and lactase. The amount of lactose may be between 10-60%, preferably between 15-55%.

In a first aspect, the process comprises a first step of mixing a lactase with a milk composition in the presence of water. By "in the presence of water" is meant that water may be present as part of the lactase, as for example in a lactase solution and/or as part of the milk composition, or may be added to a dried lactase and milk composition for example.

Thus, the lactase may be an aqueous solution or may be in the form of a dried powder.

Similarly, the milk composition may be selected from liquid compositions or dried compositions. Preferably, the milk composition is selected from low-fat milk, whole milk, reconstituted milk, milk powder, milk powders with maltodextrin and/or vegetable fats, whey powders, whey fractions, buttermilk powders, fermented milk powders, dietary or nutritional formulas containing lactose, cream powders, dairy creamers with vegetable fat and/or milk fat, health care or clinical care formulas containing lactose or any mixtures thereof.

If the lactase and the milk composition are in dried form, water is then added to form the mixture.

Preferably, the amount of water in the mixture is 30-95%, more preferably 40-70%.

The term "lactase" as used in the present invention may refer to one particular lactase enzyme or a mixture of different lactase enzymes.

The lactase is preferably selected from *Aspergillus oryzae Aspergillus niger*, *Bacillus spp*., *Escherichia coli*, *Saccharomyces fragilis*, *Saccharomyces lactis*, *Kluyveromyces spp.* lactase or any mixtures thereof. More preferably, the lactase is selected from *Aspergillus oryzae* lactase or *Aspergillus niger* lactase. The lactase preferably has an activity of more than 10000 units/g at optimum pH. Such enzymes are available commercially under the name "Lactase Amano" (Amano Enzyme Europe Limited, Chipping Norton, Oxfordshire, OX7 5SR, U.K.).

The lactase enzyme used in the present invention preferably has enzymatic activities in the acidic or the neutral pH range. When a mixture of enzymes is used, a broad range of pH activity can be achieved.

In the present invention, the enzyme is preferably not encapsulated. Thus, it is preferably present in an active form in the milk powder compositions of the invention.

The amount of lactase to be mixed with the milk composition can easily be calculated by a skilled person. It is selected to ensure complete hydrolysis of lactose to glucose and galactose. Typically, the amount of lactase present in the milk composition is 0.001-4 wt%, preferably it is 0.01-2 wt%, more preferably it is 0.05-0.5 wt% (based on dry weight). This corresponds to a more preferred lactase activity of 500 - 5000 IU/100g powder.

The drying step yields the milk powder composition of the invention. Preferably, the milk powder composition has a water content of 1-9%, more preferably 2-7%, even more preferably less than 5%. In an embodiment, the water content is less than 5% for non-fat powders. By non-fat powders are meant powders having a fat content of less than 2%. In another embodiment, the water content is less than 4% for full fat powders. By full fat powders are meant powders having a fat content greater than 5%, preferably greater than 10%.

The process according to the invention for the manufacture of a milk powder comprising 5-70% lactose and lactase comprises the step of co-drying a lactase solution and a milk composition.

By "co-drying" is meant that the lactase solution and the milk composition are dried in parallel and mixed at the dryer exit, resulting in a mixture thereof. The co-drying is carried out by co-spraying.

The lactase solution may be an aqueous solution comprising a lactase enzyme or a mixture of lactase enzymes as described above.

In this process of the invention, there is no interaction of the lactase enzyme solution with the milk composition prior to drying such that no unwanted hydrolysis reaction can occur.

The processes of the invention are preferably carried out at a temperature of at most 75°C, preferably at most 70°C. This has the advantage of preventing inactivation of the lactase enzyme.

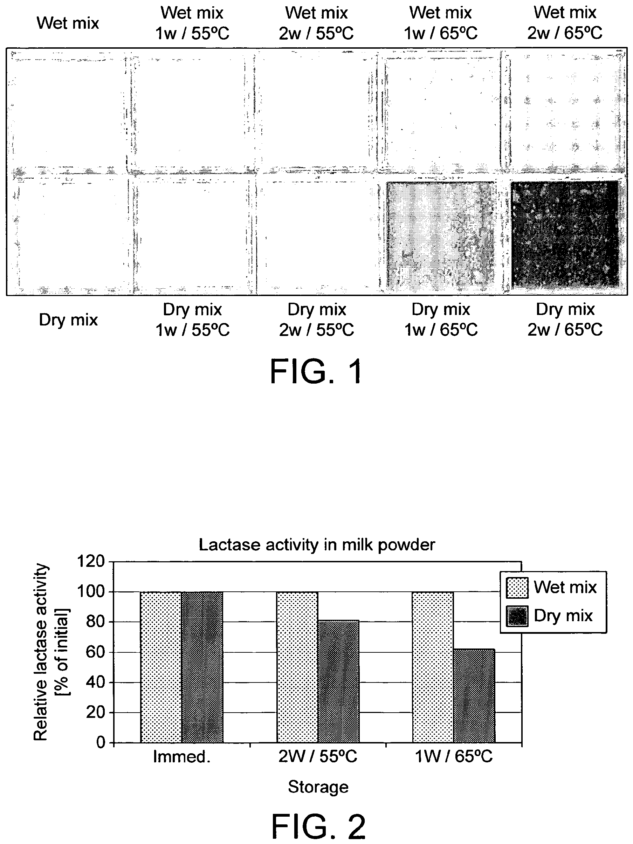

It has been found that by using these processes, the lactase activity remains excellent upon storage. Referring to figure 2, it can be seen that the milk powders produced by processes according to the invention (wet mix) have much better lactase activity stability compared to milk powders produced by a process of dry mixing milk powder and lactase enzyme powders (dry mix).

Referring to figure 1, it can also be seen that the issue of browning upon storage is considerably reduced in the products produced by the processes of the present invention (wet mix) compared to the process of dry mixing milk powder and lactase enzyme powders (dry mix).

The milk powder compositions obtainable by the processes of the invention are also part of the invention. They comprise lactose in an amount of 5-70% and lactase. The amount of lactose may be between 10-60%, preferably between 15-55%. The amount of lactose is substantially unchanged compared to the amount in the initial milk composition. Thus, essentially no hydrolysis of the lactose to glucose or galactose is allowed to occur.

The amount of lactase in the milk powder is 0.001-4 wt%, preferably 0.01-2 wt%, more preferably 0.05 to 0.5 wt% based on dry weight.

Furthermore, the lactase in the milk powder composition is in an active form. However, since the milk powder composition has a water content of 1-9%, preferably less than 5%, the lactase acts on the lactose substrate only once the milk powder composition has been reconstituted. This presents the advantage that the lactose hydrolysis occurs *in situ* upon reconstitution and/or during consumption. Compared to lactose hydrolysed products, the milk powder compositions resulting from the processes of the invention offer considerable improvements in terms of reduction of nutritional losses, such as lysine losses, or degradation of protein which occur during production and storage of lactose hydrolysed products.

Another advantage over enterically coated enzymes for example is the fact that the hydrolysis occurs immediately upon reconstitution and is not delayed by the initial digestion of the coating prior to releasing the enzyme and allowing it to interact with the lactose substrate.

The processes of the invention have been found to have an effect on the stability of the lactase enzyme. Thus, the use of these processes for stabilising lactase in a milk powder composition also forms part of the invention.

By stabilising the lactase in the composition, a more efficient hydrolysis of lactose upon reconstitution can occur. Additionally, the milk powder composition does not suffer from caking upon storage. Caking has indeed been found to occur more rapidly at the same product moisture in products containing hydrolysed lactose compared to non-hydrolysed products containing lactase. Furthermore, the issues of browning upon storage are avoided due to the stabilised lactase (cf. comparative figure 1).

The milk powder composition comprising lactose and lactase, wherein the lactase is physically associated with the milk powder particles.

By "physically associated" is meant that the lactase is incorporated into the product matrix. Without wishing to be bound by theory, it is thought that the incorporation of lactase into the product matrix is a consequence of the processes of the invention which make use of a wet or semiwet lactase composition. It is suspected that it is this tight interaction between the lactase enzyme and the milk powder particles which stabilises the lactase, thus making the milk powder compositions of the invention more amenable to storage. The tight association also allows for an efficient hydrolysis upon reconstitution of the milk powder composition in a liquid. Figure 2 shows residual lactase activities after storage at elevated temperatures comparing lactase incorporation with dry mix or wet mix technique. It clearly shows the superiority of the wet mix compared to the dry mix.

The milk powder compositions preferably comprise lactose in an amount of 5-70%. The amount of lactose may be between 10-60%, preferably between 15-55%. The amount of lactase is preferably 0.001-4 wt%, preferably it is 0.01-2 wt%, more preferably it is 0.05-0.5 wt% (based on dry weight) of the milk powder composition.

The present milk powder compositions may comprise further ingredients such as protein sources, fat sources, carbohydrate sources, colourings, minerals, vitamins, probiotics, prebiotics, active ingredients for health benefits, cosmetic nutritional supplements etc.

The milk powder compositions may be reconstituted with any liquid selected from water, juices, milk. They may indeed be used in the manufacture of dairy products such as ice cream, yogurt, milk shake, milk drinks, coffee-milk mixes, desserts etc.

The use of the milk powder compositions of the invention for alleviating the symptoms of lactose intolerance in mammals is also part of the invention. By "lactose intolerance" is not only meant a proven clinical lactose intolerance, but also a lower capacity for digesting lactose which can be caused by a number of factors such as disease, age etc. Preferably, the mammals are humans. Thus, the milk powder compositions can be used as a substitute for milk or milk-based beverages or food compositions in lactose-intolerant mammals.

The present invention is further illustrated by means of the following non-limiting examples.

### Examples

The following examples show the manufacturing processes of the invention for producing a milk powder composition.

### Example 1 (alternative process)

199.8 g of skim milk powder was weighed and recombined with 300 g pure water at 40-45°C for 15 minutes and then cooled to ambient temperature. 200 mg lactase (ex *Aspergillus oryzae*, min. 95000 U/g, Enzyme Development Corporation, New York, USA) and mixed well. The mix was immediately spray dried with a Buchi Mini Spray Dryer B-290 (parameters: Inlet Temp = 145°C, Outlet Temp = 72-75°C, Pump Speed = 23-26%, Aspirator = 80%, Vacuum = -52 mbar).

### Example 2 (invention)

500 g of full milk concentrate (at 50% dry matter) and 1.25 g lactase dissolved in 10g water are separately prepared for spray drying. The two spraying compartments proportionally dosing the two streams are filled with the milk concentrate and the lactase solution respectively and the powder is dried in the spray dryer.

### Example 3 (alternative process)

Similar to example 2, the lactase solution is sprayed to the full milk spray-dried powder in the after dryer (drying equipment located after the spray drying tower).

## Claims

1. Process for the manufacture of a milk powder composition comprising 5-70% lactose and lactase comprising the step of co-spraying a lactase solution and a milk composition to form said milk powder composition, wherein the temperature during the process steps is at most 75°C, wherein co-spraying means that the lactase solution and the milk composition are spray-dried in parallel and mixed at the drier exit.

2. Process according to claim 1, wherein the lactase is selected from *Aspergillus oryzae Aspergillus niger*, *Bacillus spp*., *Escherichia coli*, *Saccharomyces fragilis*, *Saccharomyces lactis*, *Kluyveromyces spp.* lactase or any mixtures thereof.

3. Process according to claim 1 or claim 2, wherein the milk composition is selected from low-fat milk, whole milk, reconstituted milk, milk powders with maltodextrin and/or vegetable fats, whey powders, whey fractions, buttermilk powders, fermented milk powders, dietary or nutritional formulas containing lactose, cream powders, dairy creamers with vegetable fat and/or milk fat, health care or clinical care formulas containing lactose or any mixtures thereof; and water is added to form the milk composition if a dried form of milk is selected.

4. Process according to any of the preceding claims, wherein the milk powder composition has a water content of 1-9%, preferably 2-7%.

5. Process according to any of the preceding claims, wherein the temperature during the process steps is at most 70°C.

6. Use of a process according to any of claims 1 to 5 for stabilising lactase in a milk powder composition.

7. Milk powder composition comprising lactose and lactase obtainable by a process according to any one of claims 1 to 5, wherein the lactase is physically associated with the milk powder particles, for use in alleviating the symptoms of lactose intolerance in mammals.

8. Milk powder composition for use according to claim 7, wherein the mammals are humans.

## Patentansprüche

1. Verfahren zur Herstellung einer Milchpulverzusammensetzung, die 5-70 % Lactose und Lactase umfasst, den Schritt des gemeinsamen Versprühens einer Lactaselösung und einer Milchzusammensetzung zum Bilden der Milchpulverzusammensetzung umfassend, wobei die Temperatur während des Trocknungsschrittes höchstens 75 °C beträgt, wobei gemeinsames Versprühen bedeutet, dass die Lactaselösung und die Milchzusammensetzung parallel sprühgetrocknet und am Trocknerausgang gemischt werden.

2. Verfahren nach Anspruch 1, wobei die Lactase ausgewählt ist aus Lactasen von *Aspergillus oryzae Aspergillus niger, Bacillus spp*., *Escherichia coli*, *Saccharomyces fragilis, Saccharomyces lactis*, *Kluyveromyces spp.* oder beliebigen Mischungen davon.

3. Verfahren nach Anspruch 1 oder Anspruch 2, wobei die Milchzusammensetzung ausgewählt ist aus fettarmer Milch, Vollmilch, rekonstituierter Milch, Milchpulvern mit Maltodextrin und/oder pflanzlichen Fetten, Molkepulvern, Molkefraktionen, Buttermilchpulvern, fermentierten Milchpulvern, diätetischen oder Nahrungsformulierungen, die Lactose, Sahnepulver, Kaffeeweißer auf Milchbasis mit pflanzlichem Fett und/oder Milchfett, Rezepturen zur medizinischen oder klinischen Verwendung, die Lactose enthält oder beliebigen Mischungen davon; und Wasser zugegeben wird, um die Milchzusammensetzung zu bilden, wenn eine getrocknete Milchform ausgewählt wird.

4. Verfahren nach einem der vorstehenden Ansprüche, wobei die Milchpulverzusammensetzung einen Wassergehalt von 1-9 %, vorzugsweise von 2-7 %, aufweist.

5. Verfahren nach einem der vorstehenden Ansprüche, wobei die Temperatur während der Verfahrensschritte höchstens 70 °C beträgt.

6. Verwendung eines Verfahrens nach einem der Ansprüche 1 bis 5 zum Stabilisieren von Lactase in einer Milchpulverzusammensetzung.

7. Milchpulverzusammensetzung, die Lactose und Lactase umfasst und erhältlich ist durch ein Verfahren nach einem der Ansprüche 1 bis 5, wobei die Lactase physikalisch mit den Milchpulverpartikeln assoziiert wird, zur Verwendung bei der Linderung der Symptome einer Lactoseintoleranz bei Säugern.

8. Milchpulverzusammensetzung zur Verwendung nach Anspruch 7, wobei die Säuger Menschen sind.

## Revendications

1. Procédé pour la fabrication d'une composition de lait en poudre comprenant 5 à 70 % de lactose et de la lactase comprenant l'étape de pulvérisation conjointe d'une solution de lactase et d'une composition de lait pour former ladite composition de lait en poudre, dans lequel la température pendant les étapes de procédé est d'au plus 75 °C, dans lequel une pulvérisation conjointe signifie que la solution de lactase et la composition de lait sont séchées par pulvérisation en parallèle et mélangées au niveau de la sortie du séchoir.

2. Procédé selon la revendication 1, dans lequel la lactase est choisie parmi une lactase *d'Aspergillus oryzae Aspergillus niger,* de *Bacillus spp*., *d'Escherichia coli*, de *Saccharomyces fragilis*, de *Saccharomyces lactis*, de *Kluyveromyces spp.* ou n'importe quel mélange de celles-ci.

3. Procédé selon la revendication 1 ou la revendication 2, dans lequel la composition de lait est choisie parmi du lait à faible teneur en matières grasses, du lait entier, du lait reconstitué, des laits en poudre avec de la maltodextrine et/ou des matières grasses végétales, des poudres de lactosérum, des fractions de lactosérum, des poudres de babeurre, des poudres de lait fermenté, des préparations diététiques ou nutritionnelles contenant du lactose, des poudres de crème, des crèmes à café laitières avec des matières grasses végétales et/ou des matières grasses de lait, des préparations de soins de santé ou de soins cliniques contenant du lactose ou n'importe quel mélange de ceux-ci ; et de l'eau est ajoutée pour former la composition de lait si une forme séchée de lait est choisie.

4. Procédé selon l'une quelconque des revendications précédentes, dans lequel la composition de lait en poudre a une teneur en eau de 1 à 9 %, de préférence 2 à 7 %.

5. Procédé selon l'une quelconque des revendications précédentes, dans lequel la température pendant les étapes de procédé est d'au plus 70 °C.

6. Utilisation d'un procédé selon l'une quelconque des revendications 1 à 5 pour stabiliser de la lactase dans une composition de lait en poudre.

7. Composition de lait en poudre comprenant du lactose et de la lactase, pouvant être obtenue par un procédé selon l'une quelconque des revendications 1 à 5, dans laquelle la lactase est physiquement associée aux particules de lait en poudre, pour une utilisation dans un soulagement des symptômes d'intolérance au lactose chez des mammifères.

8. Composition de lait en poudre pour utilisation selon la revendication 7, dans laquelle les mammifères sont des humains.
